# EUROPEAN PATENT SPECIFICATION

(11) **EP 1 496 071 B1**
(45) Date of publication and mention of the grant of the patent: **14.09.2005**
(21) Application number: 03015873.7
(22) Date of filing: 11.07.2003
(51) Int. Cl.: C08G 18/10, C08G 18/75, C08G 18/48

(54) **A polyurethane resin for color inks**
Polyurethanharz für Farbtinten
Résine de polyuréthane pour des encres de couleur

(43) Date of publication of application: 12.01.2005
(73) Proprietor: SICPA HOLDING S.A., 1008 Prilly (CH)
(72) Inventor: Eugène, Denis, 74800 La Roche sur Foron (FR); Eiselé, Gilles, 74250 Fillinges (FR); Catherin, Gilles, 01630 St. Genis Pouilly (FR)
(74) Representative: Welch, Andreas

(56) References cited:
- EP-A- 1 229 090
- WO-A-02/38643
- DE-A- 19 816 528
- US-B1- 6 251 988
- PATENT ABSTRACTS OF JAPAN vol. 1995, no. 09, 31 October 1995 (1995-10-31) & JP 07 165856 A (SANYO CHEM IND LTD), 27 June 1995 (1995-06-27)

## Description

The present invention relates to a polyurethane resin for color inks, to a coating composition comprising said polyurethane resin, to the use of said polyurethane resin for printing plastic substrates, to a method of producing a polyurethane resin and to a method of producing a laminate carrying a printed image, according to the preamble of the independent claims.

Polyurethane resins are the binders of choice in solvent borne coating compositions for plastic films and in the production of image carrying laminates. Laminates are multilayered shaped articles in which - according to the needs of the final article -each of the layers consist either of the same or of different materials. The preferred materials are paper, wood, textiles, metal and plastic films. In the field of food packaging, the laminates are mostly made from plastic or metal films, in particular metallized films, or a combination of both. Film materials are chosen such that the laminates can be subjected to sterilization processes without deterioriation of the film and/or the laminate. As a further advantage laminates impart to prints or generally images a satisfying appearance with respect to gloss and color fastness. Generally laminates are produced by either joining two or more layers by means of adhesives or by adhesive-free extrusion coating. Irrespective of the production process a print or generally any kind of image which does not necessarily have to be printed can be applied to one or both of the layers prior to applying the next layer (Römpp Lexikon, Lacke und Druckfarben, ed. U.Zorll, Georg Thieme Verlag, Stuttgart, New York 1998, p.214 and 318).

Coating compositions for laminates, which are mainly in the form of printing inks, have to satisfy high standards. The resin as the film forming part of the composition must provide the dried layer with the required adhesive strength both to the underlying substrate and to the adhesive or to the extruded layer. As a further requirement the resin must impart to the dried layer stability during and after sterilization processes and/or treatment in boiling water even over a prolonged period of time (e.g. during food preparation). Further the dried layer must show blocking resistance and stability during sealing of the laminate (e.g. in the production of bags). The composition - as a printing ink -must be printable in flexo and gravure printing processes which are the techniques commonly used for printing plastic films. Thus, the resin must allow the printing ink to be thinly liquid, rapidly drying and to be soluble in esters and in alcohols, in particular in ethanol.

Suitable polyurethane resins are known, for example, from EP-A-0 604 890, WO 01 /14442 or WO02/38643.

The present invention is related to a polyurethane resin, obtainable by
a) reacting 1-isocyanato-5-isocyanatomethyl-3,3,5-trimethylcyclohexane (isophorone diisocyanate (IPDI)) alone or together with one or more aliphatic diisocyanates, with a polyether polyol having an average molecular weight in the range of 1000 to less than 3000 g/mol;
b) adding a diamine;
c) adding a polyol having an average molecular weight of equal or less than 800 g/mol; and
d) optionally reacting the product obtained in steps a) to c) with at least one terminating agent
wherein the ratio of equivalent weights of diisocyanates to the group of isocyanate-reactive components consisting of the said polyether polyol, the said diamine, the said polyol, and the said terminating agent is 1:1 or greater than 1.

According to the present invention, all molecular weights are weight average molecular weights. When ranges are given, the respective boundaries are understood to be included.

The polyetherpolyol component of the polyurethane resin of present invention is generally defined by the formula 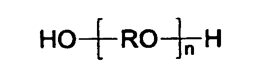 wherein R is a C₂ to C₁₀ straight chain or branched hydrocarbon group. Preferably, R is an alkylene group comprising 2 to 4 carbon atoms. Examples of preferred polyether polyols include polyethyleneether glycols (PEG), polypropyleneether glycols (PPG) and polytetramethylene ether glycols (Poly-THF). According to the present invention, the use of Poly-THF is particularly preferred. In the above formula, n is chosen such that the average molecular weight of the polyether polyol ranges from 1000 to less than 3000, preferably from 1000 to 2000. An especially preferred polyetherpolyol of the present invention is Poly-THF 2000.

The diisocyanates and the polyether polyol are reacted with each other to form a first isocyanate-terminated prepolymer. Therefore, an excess of one or more diisocyanates is reacted with the polyetherpolyol. According to the present invention, the ratio of equivalent weights of diisocyanate components to polyetherpolyol is in a range of between 3,6: 1 and 1:1, preferably about 2:1.

The reaction is carried out under conditions which are well known to those skilled in the art. According to a preferred embodiment, the reaction is carried out in the presence of a solvent using well-known catalysts.

Examples of suitable solvents are alkyl acetates such as methyl acetate, ethyl acetate, propyl acetate, butyl acetate and pentyl acetate. The total amount of solvent typically ranges from 0 to 90 percent by weight of the reaction mixture, preferably from 25 to 60 percent by weight of the reaction mixture.

A catalyst may be advantageously employed to accelerate the reaction of diisocyanate with diol. Suitable catalysts are tin derivatives such as stannous octylate, stannous oxalate, dibutyltin dilaurate, zinc derivatives such as zinc diacetate, zinc bisacetyl acetonate or Organotitanium compounds such as tetrabutytitanate, or mixtures thereof.

Further additives may be present. For example, an antioxidant such as Irganox 1076 (octadecyl-3,5-di-t-butyl-4-hydroxyhydrocinnamate) may be added.

Formation of the isocyanate-terminated prepolymer is generally carried out at a temperature ranging from 0 to 130°C, preferably ranging from 50 to 90°C. The time of the reaction generally ranges from a period of from 1 to 12 hours, preferably from 1 to 4 hours.

The thus formed isocyanate-terminated prepolymer is chain-extended with a diamine. The diamine can be any aliphatic, cycloaliphatic, aromatic, or heterocyclic diamine having primary or secondary amino groups. Example are ethylenediamine, 1,2-diaminopropane, 1,3-diaminopropane, diaminobutane, hexamethylenediamine, 1,4-diaminocyclohexane, 3-aminomethyl-3,5,5-trimethylcyclohexylamine (isophorone diamine), m-xylylene diamine, 1,2-diaminocyclohexane such as DCH 99 sold by DuPont, or 1,3-bis (aminomethyl) cyclohexane. According to the present invention, isophorone diamine is particularly preferred.

According to the present invention, it is preferred that only a small chain-extension with the diamine is carried out. Therefore, the ratio of equivalent weights of the isocyanate-terminated prepolymer to the diamine components is in a range of 10:1 and 5:1, preferably 7:1 and 5:1. Thus, the product of this reaction is a chain-extended isocyanate-terminated prepolymer.

The reaction is carried out under conditions which are well known to those skilled in the art. According to a preferred embodiment, the reaction is carried out by adding the diamine dissolved in one of the solvents mentioned before as solvents for the reaction of the diisocyanate with the polyetherpolyol to the reaction mixture. The reaction is generally carried out at a temperature ranging from 0 to 90°C, preferably from 25 to 75°C, for 5 minutes to 2 hours.

The chain-extended isocyanate-terminated prepolymer is reacted with a polyol having an average molecular weight of equal or less than 800 g/mol. According to the present invention, the term polyol is to be understood to comprise chemical substances having at least two hydroxyl groups. In this step, a significant chain extension of the prepolymer is carried out. According to the present invention, diols such as 1,4-butanediol, 1,6-hexanediol, neopentyl glycol, dihydroxy polyetherpolyols, polyesterpolyols are preferred as polyol component. The ratio of equivalent weights of the chain-extended isocyanate-terminated prepolymer to the polyol component of this section is in a range of between 2:1 and 1:1, preferably 1,6:1 and 1,2:1.

The reaction is carried out under conditions which are well known to those skilled in the art. According to a preferred embodiment, the reaction is carried out by adding the polyol to the reaction mixture. The reaction is generally carried out at a temperature ranging from 0 to 90°C, preferably from 25 to 75°C, for 30 minutes to 3 hours.

The thus formed prepolymer may further be reacted with one or more terminating agents. The terminating agents can be chosen from the group consisting of amines and alcohols. Examples of amines are monamines and diamines are butylamine, dibutylamine, aminopropylmorpholine, aminoethylpiperazine, dimethylaminopropylamine, di(isopropanol) amine, aminoethoxyethanol, ethanolamine, dimethanolamine, 4-aminophenol, isophoronediamine, 1,2-diaminocyclohexane such as DCH 99 sold by DuPont, or oleyl amine. Examples of alcohols are 1-propanol, 2-propanol, 1-butanol, 2-butanol, neopentyl alcohol, ethanol, or oleyl alcohol. The ratio of equivalent weights of the prepolymer to the terminating agents is in a range of 10:1 and 2:1.

The reaction is carried out under conditions which are well known to those skilled in the art. According to a preferred embodiment, the reaction is carried out by adding the one or more terminating agents to the reaction mixture. The reaction is generally carried out at a temperature ranging from 0 to 90°C, preferably from 25 to 75°C, for 50 minutes to 1 hour.

Optionally, the final product can be diluted in a solvent such as an alcohol, preferably ethanol, or an ester such as n-propyl acetate, in order to obtain a clear solution.

It is important that according to the present invention, there is not used an excess of isocyanate-reactive components consisting of the said polyether polyol, the said diamine, the said polyol, and the said terminating agent. The presence of unreacted isocyanate-reactive components, in particular the presence of compounds having free amino groups, would adversely influence the characteristics of the final color ink.

The thus prepared polyurethane resin has a weight average molecular weight in the range of 20000 to 80000 g/mol, preferably between 25000 to 55000 g/mol. The resin is soluble in organic solvents comprising alcohols such as ethanol. The resin according to the present invention preferably has a degree of urethanisation between 10 and 30%.

Depending on the chemical structure of the polyurethane resin and thus on the chemical nature of the reactands and their respective ratios to each other the printing inks are adjustable to the needs of different kinds of plastic substrates and/or application methods.

Besides the polyurethane resin according to the present invention, the printing ink comprises components commonly used for flexographic and gravure printing inks. The main components beside the polyurethane resin are a colorant, at least one solvent and additionally additives such as wax.

The colorant can be any color dye or pigment commonly used in flexographic and gravure printing inks. Examples are basic dyes such as Basic Red (Cl 1), lightfast dyes such as Solvent yellow (Cl 19), or pigments such as Lake Red C.

In the printing inks, a resin such as nitrocellulose may be used as a carrier for the dye or pigment.

According to the present invention, commonly used solvents such as alcohols, for example, ethanol or isopropanol, may be used.

To the printing inks, commonly used additives may be added. Examples are surfactants, plasticizers, stabilizers or waxes may be used. The use of at least one wax additive is preferred.

The term "film forming" is defined according to DIN 55945: 1996-09. Film forming is the generic term for the transition of a coating layer from the liquid to the solid state. Film forming occurs by means of physical drying and/or curing. Both processes proceed simultaneously or one after the other. The polyurethane resin of the present invention is film forming under standard conditions (25°C, minimum 40% relative humidity). Whereas the term "drying" is more related to the process engineering used for drying the liquid layer, such as ovens and temperatures, the term "curing" is related to the chemical processes within the resin during the drying process. The polyurethane of the present invention is of the non-crosslinking type.

"Initial adhesion" is defined as being the adhesion immediately after drying and up to 30 seconds maximum after drying of the layer.

"Drying" means substantial removal of the solvent from the layer. The latter is one of the requirement that the layer becomes solid. The residual solvent in the layer is not more than 10% by weight of the weight of the overal solvent. A dried layer is a layer of a thickness between 4 and 6 µm in particular 5 µm after treatment in an IR-oven by 70 - 80°C for less than one minute. In the solid state the layer is tack-free. In case the layer is thicker or thinner either the oven temperature has to be increased/decreased or the duration of heat treatment has to be adapted correspondingly.

"Layer" and "image" are used synonymously throughout the specification. Layers and images are in form of pictures, writings, overprints,(overprint varnishes) and their meaning should not be limited by their form, extension and thickness.

In the context of the present invention all technical terms shall be defined according to Römpp Lexikon, ed. U.Zoll, Georg Thieme Verlag Stuttgart, 1998.

The present invention further encompasses a method of producing a laminate carrying a printed image, said method comprises the step of
a) providing a printing ink comprising at least one organic solvent and at least one polyurethane resin of the present invention as at least one film forming binder and
b) applying a layer to a first substrate by printing said printing ink provided in step (a) in a flexographic and/or gravure printing process to said first substrate
c) removing said solvent from said layer applied in step (b) thereby drying and/or curing the layer
d) applying an adhesive to the layer of step (c) and finishing the laminate by applying a second substrate on the adhesive.

Preferably, the first and the second substrates are of a plastic material, preferably of polyolefinic nature. The first and the second substrate can also be of different chemical nature like polyester or polyamide such as Nylon.

According to the present invention, as an adhesive in this process can be used any conventional solvent-free adhesive or solvent-based adhesive.

The adhesives are applied to the layer according to conventional methods, for example by using a hand coater. Alcohol-based adhesives are preferably diluted with a conventional diluent before application. Preferably, a solution containing 20 % by weight to 80 by weight, more preferably 30 by weight to 60 by weight of the adhesive is prepared hereby.

In the case of those adhesives, it is preferred according to the present invention to apply said adhesive to the printed layer of a substrate, and then to finish the laminate by applying a second substrate on the adhesive. In the case of a solvent-free adhesive, however, it is more preferred to apply said adhesive to an unprinted layer of a substrate, and then to finish the laminate by applying the printed layer of a second substrate to the adhesive.

Further part of the present invention is therefore a laminate produced by the method mentioned hereinbefore. Of course, the laminate can also be produced by extruding the second substrate on the first substrate carrying the dried layer. This method does not call for an adhesive.

If necessary, the ink composition of the present invention can contain additional binder resins, e.g. cellulosic resins, acrylic resins, polyvinyl chloride.

### Examples

The present invention is hereinafter further illustrated with the aid of non-limiting examples. Unless otherwise indicated, all percentages are weight percents.

### Example 1: Synthesis of the polyurethane resin

A five-neck flask equipped with two additions funnels, a gas introduction means, an agitator and a thermometer was charged with a mixture of 819 g (55 wt.-%) ethyl acetate and 1,50 g (0.1 wt.-%) Irganox 1076. The mixture was thermostated at 25°C at an agitation velocity of 60 rpm and an nitrogen stream of 0.4m³/h. The temperature was increased to 60-75°C, and 90,2 g (0,784 eq) of IPDI were added together with 0,900 g (0.06 wt.-%) zinc bisacetyl acetonate (catalyst) to the flask. The agitation velocity was increased to 90 rpm. To the isocyanate solution, 400 g (0,4 eq) Poly-THF 2000 were added over a period of 10 minutes. The reaction was conducted by a temperature of 60-75°C for 30-90 minutes. In the second step, a mixture of 5,77 g (0,068 eq) isophorone diamine (IPDA) and 5,77 g ethyl acetate was added over a period of 10 minutes. The reaction was conducted by a temperature of 60-75°C for 30-90 minutes. Thereafter, 9,89 g (0,220 eq) 1,4-butanediol were slowly added. After a reaction time of 30 minutes, 2,07 g (0,034 eq.) monoethanolamine were added. After further 30 minutes, 165,0 g (11,0 wt.-%) of ethanol were added to obtain a polyurethane solution.

The resulting polyurethane had the following characteristics:

| | |
|---|---|
| Dry content | 34% |
| Viscosity | 1700 mPa·s at 25°C |
| Degree of Urethanisation | 19% |
| Nitrogen content | 18% |
| Mw | 30000-60000 Daltons |

### Example 2: Preparation of a cyan ink

The final ink was prepared by mixing the following ingredients during 20 minutes :

| | |
|---|---|
| Nitrocellulose based cyan pigment | 55,0 wt.-% |
| Solvents | 14-24 wt.-% |
| PE Wax | 1,0 wt.-% |
| Polyurethane resin of example 1 | 20-30 wt.-% |

As solvents, commonly used solvents such as alcohols were used.

The nitrocellulose based cyan pigment was prepared by grinding the following components in order to obtain a dispersion of said pigment:

| | |
|---|---|
| Collodion E 15 | 38 wt.-% |
| Dehydrated alcohol | 37 wt.-% |
| Blue pigment PB 15/4 | 25 wt.-% |

Collodion E 15 consists of 46 wt.-% nitrocellulose dissolved in ester, 22 wt-% isopropyl acetate and 32 wt.-% dehydrated alcohol.

## Claims

1. Polyurethane resin, obtainable by
a) reacting 1-isocyanato-5-isocyanatomethyl-3,3,5-trimethylcyclohexane (isophorone diisocyanate (IPDI)) alone or together with one or more aliphatic diisocyanates, with a polyether polyol having an average molecular weight in the range of 1000 to less than 3000 g/mol;
b) adding a diamine to the isocyanate-terminate prepolymer formed in step a) in order to obtain a chain-extended isocyanate-terminate prepolymer;
c) adding a polyol having an average molecular weight of equal or less than 800 g/mol to the chain-extended isocyanate-terminate prepolymer formed in step b); and
d) optionally reacting the product obtained in steps a) to c) with at least one terminating agent
wherein the ratio of equivalent weights of diisocyanates to the group of isocyanate-reactive components consisting of the said polyether polyol, the said diamine, the said polyol, and the said terminating agent is 1:1 or greater than 1.

2. Polyurethane resin according to claim 1, wherein the ratio of equivalent weights of diisocyanate components to said polyetherpolyol is in a range of between 3,6: 1 and 1:1, preferably about 2:1.

3. Polyurethane resin according to any of claims 1 to 2, wherein the polyether polyol is poly-THF2000.

4. Polyurethane resin according to any of claims 1 to 3, wherein the diamine is isophorone diamine.

5. Polyurethane resin according to any of claims 1 to 4, wherein the polyol is 1,4-butanediol.

6. Polyurethane resin according to any of claims 1 to 5, having a weight average mo-lecular weight in the range of 20000 to 80000 g/mol, preferably between 25000 to 55000 g/mol.

7. Polyurethane resin according to any of claims 1 to 6, having a degree of urethanisation between 10 and 30%.

8. Method of forming a polyurethane resin, comprising the steps of
a) reacting 1-isocyanato-5-isocyanatomethyl-3,3,5-trimethylcyclohexane (isophorone diisocyanate (IPDI)) alone or together with one or more aliphatic diisocyanates, with a polyether polyol having an average molecular weight in the range of 1000 to less than 3000 g/mol;
b) adding a diamine to the isocyanate-terminate prepolymer formed in step a) in order to obtain a chain-extended isocyanate-terminate prepolymer;
c) adding a polyol having an average molecular weight of equal or less than 800 g/mol to the chain-extended isocyanate-terminate prepolymer formed in step b); and
d) optionally reacting the product obtained in steps a) to c) with at least one terminating agent
wherein the ratio of equivalent weights of diisocyanates to the group of isocyanate-reactive components consisting of the said polyether polyol, the said diamine, the said polyol, and the said terminating agent is 1:1 or greater than 1.

9. A coating composition, preferably printing ink, comprising a solvent and at least one polyurethane resin according to one of the claims 1 to 7 as film forming binder.

10. Use of a polyurethane resin according to claims 1 to 7 as at least one film forming binder in printing inks for printing plastic substrates, preferably polyolefinic plastic substrate.

11. Method of producing a laminate carrying a printed layer, said method comprises the steps of
a) providing a coating composition, preferably a printing ink according to claim 9;
b) applying a layer to a first substrate, preferably a plastic foil, by printing said printing ink of step a) in a flexographic and/or gravure printing process;
c) removing said solvent from said layer thereby drying and/or curing said layer obtained in step b),
d) applying an adhesive to the dried and/or cured layer obtained in step c) and producing the laminate by applying at least a second substrate, preferably a plastic foil, on the adhesive.

12. Laminate produced by the method of claim 11.

## Patentansprüche

1. Polyurethanharz, das **dadurch** erhältlich ist, daß man
a) 1-Isocyanato-5-isocyanatomethyl-3,3,5-trimethylcyclohexan (Isophorondiisocyanat (IPDI)), alleine oder zusammen mit einem oder mehreren aliphatischen Diisocyanaten, mit einem Polyetherpolyol mit einem durchschnittlichen Molekulargewicht im Bereich von 1000 bis weniger als 3000 g/mol umsetzt;
b) zu dem in Schritt a) gebildeten isocyanatterminierten Prepolymer ein Diamin hinzufügt, wobei man ein kettenverlängertes isocyanatterminiertes Prepolymer erhält;
c) zu dem in Schritt b) gebildeten kettenverlängerten isocyanatterminierten Prepolymer ein Polyol mit einem durchschnittlichen Molekulargewicht kleiner gleich 800 g/mol hinzufügt und
d) gegebenenfalls das in den Schritten a) bis c) erhaltene Produkt mit mindestens einem Abbruchmittel umsetzt,
wobei sich das Verhältnis der Äquivalentgewichte von Diisocyanaten zu der aus dem Polyetherpolyol, dem Diamin, dem Polyol und dem Abbruchmittel bestehenden Gruppe von gegenüber Isocyanat reaktiven Komponenten auf 1:1 oder mehr als 1 beläuft.

2. Polyurethanharz nach Anspruch 1, bei dem das Verhältnis der Äquivalentgewichte von Diisocyanatkomponenten zu dem Polyetherpolyol im Bereich zwischen 3,6:1 und 1:1, vorzugsweise bei etwa 2:1, liegt.

3. Polyurethanharz nach Anspruch 1 oder 2, bei dem es sich bei dem Polyetherpolyol um Poly-THF 2000 handelt.

4. Polyurethanharz nach einem der Ansprüche 1 bis 3, bei dem es sich bei dem Diamin um Isophorondiamin handelt.

5. Polyurethanharz nach einem der Ansprüche 1 bis 4, bei dem es sich bei dem Polyol um 1,4-Butandiol handelt.

6. Polyurethanharz nach einem der Ansprüche 1 bis 5 mit einem Gewichtsmittel-Molekulargewicht im Bereich von 20.000 bis 80.000 g/mol, vorzugsweise zwischen 25.000 und 55.000 g/mol.

7. Polyurethanharz nach einem der Ansprüche 1 bis 6 mit einem Urethanisierungsgrad zwischen 10 und 30%.

8. Verfahren zur Herstellung eines Polyurethanharzes, bei dem man:
a) 1-Isocyanato-5-isocyanatomethyl-3,3,5-trimethylcyclohexan (Isophorondiisocyanat (IPDI)), alleine oder zusammen mit einem oder mehreren aliphatischen Diisocyanaten, mit einem Polyetherpolyol mit einem durchschnittlichen Molekulargewicht im Bereich von 1000 bis weniger als 3000 g/mol umsetzt;
b) zu dem in Schritt a) gebildeten isocyanatterminierten Prepolymer ein Diamin hinzufügt, wobei man ein kettenverlängertes isocyanatterminiertes Prepolymer erhält;
c) zu dem in Schritt b) gebildeten kettenverlängerte isocyanatterminierten Prepolymer ein Polyol mit einem durchschnittlichen Molekulargewicht kleiner gleich 800 g/mol hinzufügz und
d) gegebenenfalls das in den Schritten a) bis c) erhaltene Produkt mit mindestens einem Abbruchmittel umsetzt,
wobei sich das Verhältnis der Äquivalentgewichte von Diisocyanaten zu der aus dem Polyetherpolyol, dem Diamin, dem Polyol und dem Abbruchmittel bestehenden Gruppe von gegenüber Isocyanat reaktiven Komponenten auf 1:1 oder mehr als 1 beläuft.

9. Beschichtungszusammensetzung, vorzugsweise Druckfarbe, enthaltend ein Lösungsmittel und mindestens ein Polyurethanharz gemäß einem der Ansprüche 1 bis 7 als filmbildendes Bindemittel.

10. Verwendung eines Polyurethanharzes gemäß einem der Ansprüche 1 bis 7 als mindestens ein filmbildendes Bindemittel in Druckfarben zum Bedrucken von Kunststoffsubstraten, vorzugsweise polyolefinischem Kunststoffsubstrat.

11. Verfahren zur Herstellung eines Laminats mit einer aufgedruckten Schicht, bei dem man:
a) eine Beschichtungszusammensetzung, vorzugsweise eine Druckfarbe, gemäß Anspruch 9 bereitstellt;
b) auf ein erstes Substrat, vorzugsweise eine Kunststoffolie, eine Schicht aufbringt, indem man die Druckfarbe aus Schritt a) in einem Flexo- und/oder Tiefdruckverfahren aufdruckt;
c) das Lösungsmittel aus der Schicht entfernt und **dadurch** die in Schritt b) erhaltene Schicht trocknet und/oder härtet; und
d) auf die in Schritt c) erhaltene getrocknete und/oder gehärtete Schicht einen Klebstoff aufbringt und durch Aufbringen mindestens eines zweiten Substrats, vorzugsweise einer Kunststoffolie, auf den Klebstoff das Laminat herstellt.

12. Nach dem Verfahren gemäß Anspruch 11 hergestelltes Laminat.

## Revendications

1. Résine polyuréthanne, pouvant être obtenue en
a) faisant réagir du 1-isocyanato-5-isocyanatométhyl-3,3,5-triméthylcyclohexane (isophorone diisocyanate (IPDI)), seul ou avec un ou plusieurs diisocyanates aliphatiques, avec un polyétherpolyol ayant un poids moléculaire moyen dans la plage de 1000 à moins de 3000 g/mole ;
b) ajoutant une diamine au prépolymère à terminaison isocyanate formé à l'étape a) afin d'obtenir un prépolymère à terminaison isocyanate à chaîne étendue ;
c) ajoutant un polyol ayant un poids moléculaire moyen égal ou inférieur à 800 g/mole au prépolymère à terminaison isocyanate à chaîne étendue formé à l'étape b) ; et
d) faisant réagir facultativement le produit obtenu aux étapes a) à c) avec au moins un agent de terminaison
dans laquelle le rapport des poids équivalents des diisocyanates sur le groupe de composants réagissant avec un isocyanate, constitué dudit polyétherpolyol, de ladite diamine, dudit polyol et dudit agent de terminaison, est de 1:1, ou est supérieur à 1.

2. Résine polyuréthanne selon la revendication 1, dans laquelle le rapport des poids équivalents des composants diisocyanates sur ledit polyétherpolyol est dans une plage comprise entre 3,6:1 et 1:1, et est de préférence d'environ 2:1.

3. Résine polyuréthanne selon l'une quelconque des revendications 1 et 2, dans laquelle le polyétherpolyol est le poly-THF2000.

4. Résine polyuréthanne selon l'une quelconque des revendications 1 à 3, dans laquelle la diamine est l'isophorone diamine.

5. Résine polyuréthanne selon l'une quelconque des revendications 1 à 4, dans laquelle le polyol est le 1,4-butanediol.

6. Résine polyuréthanne selon l'une quelconque des revendications 1 à 5, ayant un poids moléculaire moyen en poids dans la plage de 20 000 à 80 000 g/mole, et est de préférence entre 25 000 et 55 000 g/mole.

7. Résine polyuréthanne selon l'une quelconque des revendications 1 à 6, ayant un degré d'uréthanisation compris entre 10 et 30 %.

8. Procédé pour former une résine polyuréthanne, comprenant les étapes consistant à
a) faire réagir du 1-isocyanato-5-isocyanatométhyl-3,3,5-triméthylcyclohexane (isophorone diisocyanate (IPDI)), seul ou avec un ou plusieurs diisocyanates aliphatiques, avec un polyétherpolyol ayant un poids moléculaire moyen dans la plage de 1000 à moins de 3000 g/mole ;
b) ajouter une diamine au prépolymère à terminaison isocyanate formé à l'étape a) afin d'obtenir un prépolymère à terminaison isocyanate à chaîne étendue ;
c) ajouter un polyol ayant un poids moléculaire moyen égal ou inférieur à 800 g/mole au prépolymère à terminaison isocyanate à chaîne étendue formé à l'étape b) ; et
d) faire réagir facultativement le produit obtenu aux étapes a) à c) avec au moins un agent de terminaison
dans lequel le rapport des poids équivalents des diisocyanates sur le groupe de composants réagissant avec un isocyanate, constitué dudit polyétherpolyol, de ladite diamine, dudit polyol et dudit agent de terminaison, est de 1:1, ou est supérieur à 1.

9. Composition de revêtement, de préférence encre d'impression, comprenant un solvant et au moins une résine polyuréthanne selon l'une des revendications 1 à 7, en tant que liant formant film.

10. Utilisation d'une résine polyuréthanne selon les revendications 1 à 7, en tant qu'au moins un liant formant film, dans des encres d'impression pour l'impression de substrats en matière plastique, de préférence un substrat en matière plastique polyoléfinique.

11. Procédé pour produire un stratifié portant une couche imprimée, ledit procédé comprenant les étapes consistant à
a) se munir d'une composition de revêtement, de préférence une encre d'impression, selon la revendication 9 ;
b) appliquer une couche sur un premier substrat, de préférence une feuille de matière plastique, en appliquant par impression ladite encre d'impression de l'étape a) suivant un processus d'impression flexographique et/ou en creux ;
c) éliminer ledit solvant de ladite couche, en séchant et/ou en faisant durcir ainsi ladite couche obtenue à l'étape b),
d) appliquer un adhésif sur la couche séchée et/ou durcie obtenue à l'étape c), et produire le stratifié en appliquant au moins un second substrat, de préférence une feuille de matière plastique, sur l'adhésif.

12. Stratifié produit par le procédé selon la revendication 11.
